# EUROPEAN PATENT SPECIFICATION

(11) **EP 1 712 813 B1**
(45) Date of publication and mention of the grant of the patent: **29.06.2011**
(21) Application number: 06112220.6
(22) Date of filing: 04.04.2006
(51) Int. Cl.: F16G 1/16

(54) **Flat belt**
Flachriemen
Courroie plate

(30) Priority: 14.04.2005 JP 2005116603
(43) Date of publication of application: 18.10.2006
(73) Proprietor: Nitta Corporation, Osaka-shi, Osaka (JP)
(72) Inventor: Yamamoto, Takashi, Yamatokoriyama-shi Nara (JP); Nozaki, Tatsuya, Yamatokoriyama-shi Nara (JP)
(74) Representative: Schaumburg, Thoenes, Thurn, Landskron, Eckert

(56) References cited:
- EP-A1- 0 388 649
- WO-A-96/13374
- WO-A-97/14557
- DE-C2- 1 249 158
- US-A- 3 197 021
- US-A- 3 574 022

## Description

### BACKGROUND OF THE INVENTION

### 1. Field of the Invention

The present invention relates to a flat belt used as part of a conveyer device or a power transmission device.

### 2. Description of the Related Art

Conventionally, there is known a flat belt, in which reinforcement fabrics are adhered on both the upper and lower surfaces of an intermediate layer in which cords are embedded, and in which the surface layers, comprised of rubber or thermoplastic elastomer, are laminated on outer surfaces of the reinforcement fabrics. In this type of flat belt, the cords are non-expandable tension members, which strengthen the flat belt in the longitudinal direction, and the reinforcement fabrics contribute to the lateral strength, i.e., the flexural rigidity of the flat belt in the width direction.

On the other hand, in the manufacturing system known as the folder-gluer, in which cardboard that is cut in a predetermined shape, is bent and glued to form a paper box, there is known a device in which a flat belt is provided for conveying the cardboard. In this system, the flat belt, which is engaged with the cardboard, may be twisted by 90 degrees about the longitudinal axis thereof, in order to bend the cardboard, for example.

Although a flat belt twisted about the longitudinal axis thereof needs to have excellent torsional rigidity, a conventional flat belt, as described above, has a drawback of not having sufficient torsional rigidity.

WO 96/13374 A1 discloses a processing band for compacting bulk materials which has three mutually spaced fabric layers interconnected by intermediate layers. The middle fabric layer has warp threads with a particularly high modulus of elasticity. the outer fabric layers have a modulus of elasticity in the longitudinal direction of the processing band that is significantly lower than that of the middle fabric layer. The intermediate layers comprise three layers of different materials.

US 3 574 022 A discloses a conveying or driving belt having a multi-layer structure. This belt includes three fabric sheets each of these sheets consisting of warps and wefts. The three fabric sheets are identical in structure and therefore identical in their reinforcement effects.

### SUMMERY OF THE INVENTION

Therefore, an object of the present invention is to provide a flat belt, which has sufficient rigidity with respect to the torsion about the longitudinal axis of the flat belt.

According to the present invention, there is provided a flat belt comprising a longitudinal reinforcement fabric, a first thermoplastic resin layer, a second thermoplastic resin layer, a first lateral reinforcement fabric, a second lateral reinforcement fabric, and a first friction layer.

The longitudinal reinforcement fabric reinforces the flat belt along the longitudinal direction. The first thermoplastic resin layer is laminated on an upper side of the longitudinal reinforcement fabric. The second thermoplastic resin layer is laminated on a lower side of the longitudinal reinforcement fabric. The first lateral reinforcement fabric is laminated on an upper side of the first thermoplastic resin layer to reinforce the flat belt along the lateral direction. The second lateral reinforcement fabric is laminated on a lower side of the second thermoplastic resin layer to reinforce the flat belt along the lateral direction. The first friction layer is provided above an upper side of the first lateral reinforcement fabric, and is formed with a conveyor surface for conveying a subject.

### BRIEF DESCRIPTION OF THE DRAWINGS

The objects and advantages of the present invention will be better understood from the following description, with reference to the accompanying drawings in which:
Fig. 1 is a sectional view of a flat belt of an embodiment of the present invention;
Fig. 2 is a plan view showing a state in which both end portions of an intermediate product, formed in a strip-shape and having a layer structure shown in Fig. 1, face each other; and
Fig. 3 is a perspective view showing a process for bending cardboard in a folder-gluer provided with the flat belt of the embodiment.

### DESCRIPTION OF THE PREFERRED EMBODIMENTS

The present invention will be described below with reference to an embodiment shown in the drawings.

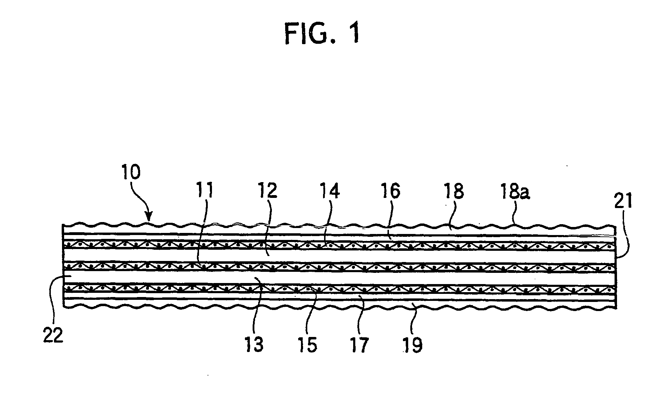

Fig. 1 shows a layer structure of a flat belt 10, which is an embodiment of the present invention. Although the flat belt 10 is endless, Fig. 1 shows a state in which the flat belt 10 is flattened, i.e., a state before both end portions 21 and 22 are joined. Fig. 1 is a vertical sectional view, in which the flat belt 10 is cut by a plane extending in the longitudinal direction (i.e., the horizontal direction in the drawing) of the flat belt 10, but the length of the flat belt 10 is shown as being extremely short for ease of indication in the drawing.

The flat belt 10 is provided with a longitudinal reinforcement fabric 11 at the central portion in the thickness direction of the flat belt 10. The longitudinal reinforcement fabric 11 extends the whole length of the flat belt 10, and is provided for reinforcing the flat belt 10 along the longitudinal direction. As the longitudinal reinforcement fabric 11, it is preferable to use a fabric made of nylon or polyester, which are not substantially stretchable or elastic in the longitudinal direction.

First and second thermoplastic resin layers 12 and 13 are laminated and adhered on the upper and lower sides of the longitudinal reinforcement fabric 11. The thermoplastic resin needs to be adhesive and flexible, and for example, thermoplastic polyurethane can be used as the thermoplastic resin.

A first lateral reinforcement fabric 14 is laminated and adhered on an upper side of the first thermoplastic resin layer 12 in order to reinforce the flexural rigidity of the flat belt 10 in the width direction, or the lateral strength. Similarly, a second lateral reinforcement fabric 15 is laminated and adhered on a lower side of the second thermoplastic resin layer 13 to reinforce the lateral strength. As the lateral reinforcement fabrics 14 and 15, it is preferable to use a fabric made of nylon or polyester, which are stretchable or elastic in the longitudinal direction.

A third thermoplastic resin layer 16 is laminated and adhered on an upper side of the first lateral reinforcement fabric 14, and a fourth thermoplastic resin layer 17 is laminated and adhered on a lower side of the second lateral reinforcement fabric 15. The third and fourth thermoplastic resin layers 16 and 17 are thermoplastic polyurethane, for example, similarly to the first and second thermoplastic resin layers 12 and 13. Namely, as the most simple structure, the thermoplastic resin layers 12, 13, 16, and 17 are made of the same material.

A first friction layer 18, which is rubber, is laminated and adhered on an upper side of the third thermoplastic resin layer 16. A surface of the first friction layer 18 is a conveyor surface 18a, being an awled surface, which is a rugged surface having a regularly arranged convex and concave parts, so that the first friction layer 18 has a predetermined frictional coefficient to convey a subject. Similarly, a second friction layer 19, having the same structure as the first friction layer 18, is laminated and adhered on a lower side of the fourth thermoplastic resin layer 17. Therefore, the second friction layer 19 can work as a conveyor surface.

Thus, although, in this embodiment, the third thermoplastic resin layer 16 is provided between the first lateral reinforcement fabric 14 and the first friction layer 18, the third thermoplastic resin layer 16 can be omitted, and the first friction layer 18 may be directly laminated on the upper surface of the first lateral reinforcement fabric 14, according to the object of the system. Similarly, the fourth thermoplastic resin layer 17 provided between the second lateral reinforcement fabric 15 and the second friction layer 19 may be omitted, and the second friction layer 19 may be directly laminated on the lower side of the second lateral reinforcement fabric.

In other words, in this embodiment, the first friction layer 18 is provided above the upper side of the first lateral reinforcement fabric 14. Further, the second friction layer 19 is providedbelow the lower side of the second lateral reinforcement fabric 15.

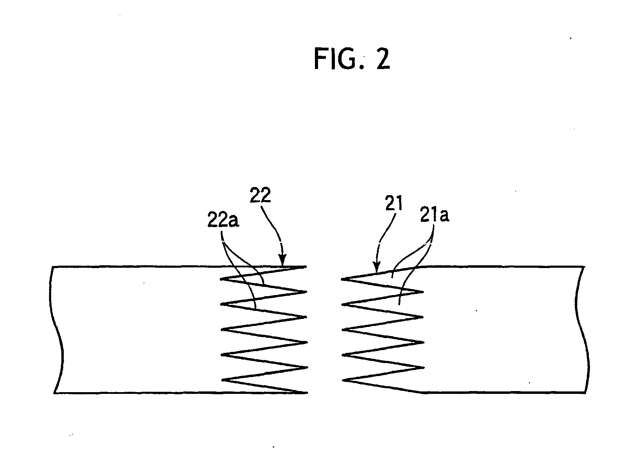

Fig. 2 is aplanview showing a state in which both endportions 21 and 22 of an intermediate product, formed in a strip-shape and having a layer structure shown in Fig. 1, face each other. In the drawing, the first end portion 21 of the intermediate product has a plurality of projections 21a appearing as isosceles triangles, and the second end portion 22 has a plurality of recesses 22a having the same shape as the projections 21a. Namely, the first and second end portions 21 and 22 are formed as complementary shapes, so that the projections 21a can be engaged with the recesses 22a. Thus, when the both end portions 21 and 22 are engaged with each other, the thermoplastic resin layers 12, 13, 16, and 17 atboth endportions abut against each other. Both end portions 21 and 22 are heated and pressed against each other while engaging each other, so that the flat belt 10, formed in an endless shape, is obtained.

Although both end portions 21 and 22 are formed in a saw-toothed shape in the example of Fig. 2, any complementary form can be used.

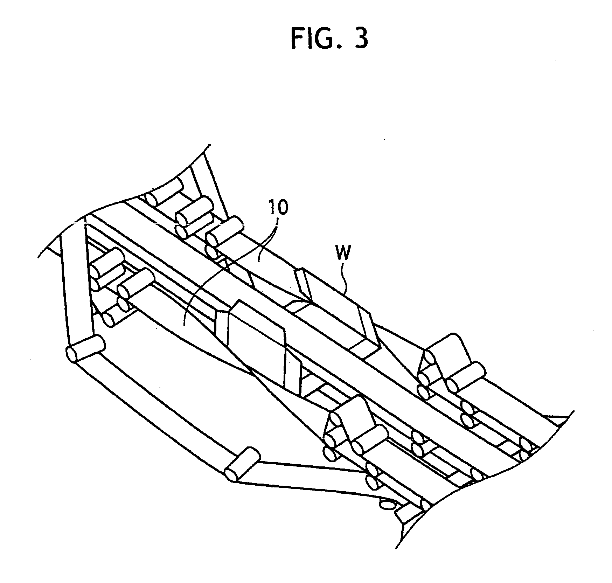

In the flat belt 10, having a structure described above, since the longitudinal reinforcement fabric 11 is provided at the center portion of the layered structure, the rigidity against the twist about the longitudinal axis is increased in comparison with a structure in which a plurality of cords are provided, so that the durability of the flat belt 10 is improved. Namely, in part of the folder-gluer process shown in Fig. 3, the flat belt 10 may be twisted about the longitudinal axis by 90 degrees in order to bend cardboard W. According to the embodiment, since the torsion rigidityof the flatbelt 10 is increased, the durability is improved, so that the life of the flat belt 10 is extended.

On the other hand, since a cord has higher flexural rigidity than fabric, a flat belt having a cord is not suitable for a device provided with a pulley having a small diameter. Conversely, in this embodiment, since the longitudinal reinforcement fabric 11 is used, the flexibility of the flat belt 10 is improved, and thus, the flat belt 10 can be applied to a device with a small diameter pulley.

Further, in the embodiment, since the first and second lateral reinforcement fabrics 14 and 15 are provided symmetrically about the longitudinal reinforcement fabric 11, flexural rigidity in the lateral direction of the flat belt 10 can be ensured.

Furthermore, in the embodiment, other than the first and second thermoplastic resin layers 12 and 13, the third thermoplastic resin layer 16 is laminated on the upper side of the first lateral reinforcement 14, and the fourth thermoplastic resin layer 17 is laminated on the lower side of the second lateral reinforcement fabric 15. In other words, the first lateral reinforcement 14 is sandwiched between the first and third thermoplastic resin layers 12 and 16, and the second lateral reinforcement 15 is sandwiched between the second and fourth thermoplastic resin layers 13 and 17. Therefore, both endportions 21 and 22 are firmly joined or connected, so that the join portion is prevented from separating during use, and thus, the life of the flat belt 10 is improved.

Note that, although, in the above embodiment, the first friction layer 18 is rubber, the material can be changed in accordance with the object of use, and may be a thermoplastic elastomer, for example.

## Claims

1. A flat belt (10) comprising:
a longitudinal reinforcement fabric (11) for reinforcing said flat belt (10) along the longitudinal direction;
a first thermoplastic resin layer (12) that is laminated on an upper side of said longitudinal reinforcement fabric (11);
a second thermoplastic resin layer (13) that is laminated on a lower side of said longitudinal reinforcement fabric (11);
a first lateral reinforcement fabric (14) that is laminated on an upper side of said first thermoplastic resin layer (12) to reinforce said flat belt (10) along the lateral direction;
a second lateral reinforcement fabric (15) that is laminated on a lower side of said second thermoplastic resin layer (13) to reinforce said flat belt (10) along the lateral direction; and
a first friction layer (18) that is provided above an upper side of said first lateral reinforcement fabric (14), and is formed with a conveyor surface for conveying a subject,
**characterized in that** said longitudinal reinforcement fabric (11) made of nylon or polyester, is substantially not stretchable or elastic in the longitudinal direction whereas said first and second lateral reinforcement fabrics (14, 15) made of nylon or polyester, are stretchable or elastic in the longitudinal direction.

2. A flat belt according to claim 1, further comprising a third thermoplastic resin layer (16) provided between said first lateral reinforcement fabric (14) and said first friction layer (18).

3. A flat belt according to claim 1, further comprising a second friction layer (19) that is provided on a lower side of said second lateral reinforcement fabric (15), and has the same structure as said first friction layer (18).

4. A flat belt according to claim 3, further comprising a fourth thermoplastic resin layer (17) provided between said second lateral reinforcement fabric (15) and said second friction layer (19).

5. A flat belt according to claim 1, wherein said first friction layer (18) comprises rubber.

6. A flat belt according to claim 1, wherein said first friction layer (18) comprises a thermoplastic elastomer.

7. A flat belt according to claim 1, wherein an intermediate product, comprising said longitudinal reinforcement fabric (11), said first and second thermoplastic resin layers (12, 13), said first and second lateral reinforcement fabrics (14, 15), and said first friction layer (18), is formed in a strip-shape, and has two endportions (21, 22), which are formed in complementary shapes, said end portions being heated and pressed against each other while engaging each other, so that said flat belt is formed in an endless shape.

8. A flat belt according to claim 7, wherein said both end portions (21, 22) are formed in a saw-toothed shape.

## Patentansprüche

1. Flachriemen (10) mit
einem Längsverstärkungsstoff (11) zum Verstärken des Flachriemens (10) entlang der Längsrichtung;
einer ersten thermoplastischen Harzschicht (12), die auf eine Oberseite des Längsverstärkungsstoffs (11) laminiert ist;
einer zweiten thermoplastischen Harzschicht (13), die auf eine Unterseite des Längsverstärkungsstoffs (11) laminiert ist;
einem ersten Querverstärkungsstoff (14), der auf eine Oberseite der ersten thermoplastischen Harzschicht (12) laminiert ist, um den Flachriemen (10) entlang der Querrichtung zu verstärken;
einem zweiten Querverstärkungsstoff (15), der auf eine Unterseite der zweiten thermoplastischen Harzschicht (13) laminiert ist, um den Flachriemen (10) entlang der Querrichtung zu verstärken; und
einer ersten Reibungsschicht (18), die oberhalb einer Oberseite des ersten Querverstärkungsstoffs (14) vorgesehen ist und mit einer Förderfläche zum Fördern eines Gegenstands ausgebildet ist,
**dadurch gekennzeichnet, dass** der aus Nylon oder Polyester bestehende Längsverstärkungsstoff (11) in der Längsrichtung im Wesentlichen nicht dehnbar oder elastisch ist, wohingegen der aus Nylon oder Polyester bestehende erste und zweite Querverstärkungsstoff (14, 15) in der Längsrichtung dehnbar oder elastisch sind.

2. Flachriemen nach Anspruch 1, der ferner eine dritte thermoplastische Harzschicht (16) umfasst, die zwischen dem ersten Querverstärkungsstoff (14) und der ersten Reibungsschicht (18) vorgesehen ist.

3. Flachriemen nach Anspruch 1, der ferner eine zweite Reibungsschicht (19) umfasst, die auf einer Unterseite des zweiten Querverstärkungsstoffs (15) vorgesehen ist und die gleiche Struktur wie die erste Reibungsschicht (18) hat.

4. Flachriemen nach Anspruch 3, der ferner eine vierte thermoplastische Harzschicht (17) umfasst, die zwischen dem zweiten Querverstärkungsstoff (15) und der zweiten Reibungsschicht (19) vorgesehen ist.

5. Flachriemen nach Anspruch 1, wobei die erste Reibungsschicht (18) Gummi enthält.

6. Flachriemen nach Anspruch 1, wobei die erste Reibungsschicht (18) einen thermoplastischen Elastomer enthält.

7. Flachriemen nach Anspruch 1, wobei ein Zwischenprodukt, das den Längsverstärkungsstoff (11), die erste und zweite thermoplastische Harzschicht (12, 13), den ersten und zweiten Querverstärkungsstoff (14, 15) und die erste Reibungsschicht (18) umfasst, streifenförmig ausgebildet ist und zwei Endabschnitte (21, 22) hat, die komplementär geformt sind, wobei die Endabschnitte erhitzt und aneinander gedrückt werden, während sie miteinander in Eingriff sind, so dass der Flachriemen in Endlosform ausgebildet ist.

8. Flachriemen nach Anspruch 7, wobei die beiden Endabschnitte (21, 22) in Sägezahnform ausgebildet sind.

## Revendications

1. Courroie plate (10) comprenant :
un tissu de renfort longitudinal (11) destiné à renforcer ladite courroie plate (10) le long de la direction longitudinale ;
une première couche de résine thermoplastique (12) qui est stratifiée sur un côté supérieur dudit tissu de renfort longitudinal (11) ;
une deuxième couche de résine thermoplastique (13) qui est stratifiée sur un côté inférieur dudit tissu de renfort longitudinal (11) ;
un premier tissu de renfort latéral (14) qui est stratifié sur un côté supérieur de ladite première couche de résine thermoplastique (12) pour renforcer ladite courroie plate (10) le long de la direction latérale ;
un deuxième tissu de renfort latéral (15) qui est stratifié sur un côté inférieur de ladite deuxième couche de résine thermoplastique (13) pour renforcer ladite courroie plate (10) le long de la direction latérale ; et
une première couche de frottement (18) qui est disposée au-dessus d'un côté supérieur dudit premier tissu de renfort latéral (14) et est formée d'une surface de transport destinée à transporter un sujet,
**caractérisé en ce que** ledit tissu de renfort longitudinal (11) constitué de nylon ou de polyester, n'est globalement pas étirable ou élastique dans la direction longitudinale alors que lesdits premier et deuxième tissus de renfort latéral (14, 15), constitués de nylon ou de polyester, sont étirables ou élastiques dans la direction longitudinale.

2. Courroie plate selon la revendication 1, comprenant en outre une troisième couche de résine thermoplastique (16) prévue entre ledit premier tissu de renfort latéral (14) et ladite première couche de frottement (18).

3. Courroie plate selon la revendication 1, comprenant en outre une deuxième couche de frottement (19) qui est disposée sur un côté inférieur dudit deuxième tissu de renfort latéral (15) et a la même structure que ladite première couche de frottement (18).

4. Courroie plate selon la revendication 3, comprenant en outre une quatrième couche de résine thermoplastique (17) disposée entre ledit deuxième tissu de renfort latéral (15) et ladite deuxième couche de frottement (19).

5. Courroie plate selon la revendication 1, dans laquelle ladite première couche de frottement (18) comprend du caoutchouc.

6. Courroie plate selon la revendication 1, dans laquelle ladite première couche de frottement (18) comprend un élastomère thermoplastique.

7. Courroie plate selon la revendication 1, dans laquelle un produit intermédiaire, comprenant ledit tissu de renfort longitudinal (11), lesdites première et deuxième couches de résine thermoplastique (12, 13), lesdits premier et deuxième tissus de renfort latéral (14, 15) et ladite première couche de frottement (18), est façonné suivant une forme de bande et comporte deux parties d'extrémités (21, 22) qui sont façonnées selon des formes complémentaires, lesdites parties d'extrémités étant chauffées et comprimées l'une contre l'autre lorsqu'elles sont en contact mutuel, de sorte que ladite courroie plate est façonnée suivant une forme sans fin.

8. Courroie plate selon la revendication 7, dans laquelle lesdites deux parties d'extrémités (21, 22) sont façonnées suivant une forme en dents de scie.
